# EUROPEAN PATENT SPECIFICATION

(11) **EP 2 345 298 B1**
(45) Date of publication and mention of the grant of the patent: **17.09.2014**
(21) Application number: 09825026.9
(22) Date of filing: 30.10.2009
(51) Int. Cl.: H04L 29/06, H04L 29/08, H04W 4/02, H04W 4/20, H04W 76/04

(54) **A METHOD FOR A SESSION TRANSFER MECHANISM BETWEEN COMMUNICATION DEVICES**
VERFAHREN FÜR EINEN SITZUNGSÜBERTRAGUNGSMECHANISMUS ZWISCHEN KOMMUNIKATIONSGERÄTEN
PROCÉDÉ D'UN MÉCANISME DE TRANSFERT DE SESSION ENTRE DISPOSITIFS DE COMMUNICATION

(30) Priority: 07.11.2008 MY 0804462
(43) Date of publication of application: 20.07.2011
(73) Proprietor: Mimos Berhad, 57000 Kuala Lumpur (MY)
(72) Inventor: CHOONG Khong Neng, 57000 Kuala Lumpur (MY)
(74) Representative: Hering, Hartmut
(86) International application number: PCT/MY2009/000178
(87) International publication number: WO 2010/053345

(56) References cited:
- US-A1- 2004 122 954
- US-A1- 2005 054 335
- US-A1- 2006 239 253
- US-A1- 2007 118 656
- US-A1- 2007 282 990
- US-A1- 2007 287 438
- SHACHAM H SCHULZRINNE COLUMBIA UNIVERSITY S THAKOLSRI W KELLERER DOCOMO EURO-LABS R: "Session Initiation Protocol (SIP) Session Mobility; draft-shacham-sipping-session-mobility-04. txt", 20070706, no. 4, 6 July 2007 (2007-07-06), XP015052172, ISSN: 0000-0004
- "3rd Generation Partnership Project; Technical Specification Group Services and Architecture; Feasibility Study on Multimedia Session Continuity; Stage 2 (Release 8)", 3GPP STANDARD; 3GPP TR 23.893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 June 2008 (2008-06-01), pages 1-62, XP050364175,
- ACHARYA A ET AL: "Unleashing the Power of Wearable Devices in a SIP Infrastructure", PERVASIVE COMPUTING AND COMMUNICATIONS, 2005. PERCOM 2005. THIRD IEEE INTERNATIONAL CONFERENCE ON KAUAI ISLAND, HI, USA 08-12 MARCH 2005, PISCATAWAY, NJ, USA,IEEE, 8 March 2005 (2005-03-08), pages 159-168, XP010779650, DOI: 10.1109/PERCOM.2005.51 ISBN: 978-0-7695-2299-9

## Description

### FIELD OF INVENTION

The present invention relates to a method for session transfer mechanism between communication devices.

### BACKGROUND ART

Device switching is a mechanism where an application or session is switched or transferred from one communication device to another. These sessions are normally active ongoing sessions such as voice calls, video calls, conference calls, software simulations and many other applications having similar effect. The implementation of device switching or session transfer has become increasingly accepted by users especially with the variety of device types and functions therein as well as the advancement in the telecommunication industry.

Session transfer provides users with flexibility of executing applications, storing, processing and transferring data as well as eliminating dependency on a single device or a fixed location. With the increase in demand for seamless mobility, there is a constant need for improvement and betterment in the execution of session transfer to allow users to seamlessly implement device switching.

The common and conventional implementation of device switching requires a user to have addressing information of the target device for the switching purpose. The addressing information is fundamentally an IP address of the target device, assuming the device is an IP compatible device. The user is then required to input the IP address upon initiation of a session transfer so as to execute the device switching. Such restriction of having to be aware of the addressing information of the target device degrades the users' experience as far as seamless mobility is concerned, as the same interrupts the ongoing active session.

More complication arises when a user is unaware that he has input the wrong addressing information or IP address upon initiation of a session transfer. This result in the generation of errors and to some extent could disrupt the ongoing active session.

Additionally, another constraint of the conventional implementation of session transfer is the limitation of the point of control of the active session. The point of control remains with the active device, the device where the active session was switched from. This limits the flexibility and usability of seamless session transfer where the passive device, the device where the active session was switched to, with regards to point of control of the ongoing active session.

A general methodology which specifies the signaling and media flow for session mobility using the Session Initiation Protocol (SIP) is described in an Internet draft by Shacham et. al. entitled " Initiation Protocol (SIP) Session Mobility. In short, Shacham et. al. teaches the use of location coordinates based on specific location information such as street address and room number. Further, Shacham et. al. also describes the transfer of on-going session across devices. However, Shacham et. al. only provide information of all devices within a room and does not automatically select the closest device.

Technical specification group services and architecture is described in the technical report entitled "Feasibility Study on Multimedia Session Continuity; Stage 2 (Release 8) developed within the 3^{rd} Generation Partnership Project. The said technical report relates to the architectural requirements and assumptions on mobility mechanism of 3GPP.

The field of data communication networks particularly to techniques for context-aware migration of a communication session such as an Internet Protocol (IP) multimedia subsystem (IMS) session is disclosed in United States Patent Publication No. US 2007/282990 A1. The methodology for migrating a communication session established between a first entity and a second entity in accordance with an application module, comprising the steps of obtaining, in a context monitor module supporting the application module, context information associated with at least one of the first entity and the second entity; and effectuating, in a migration server module supporting the application module, a transfer of the communication session from one communication device associated with the first entity to another communication device associated with the first entity. The context monitor module and the migration server module operate in cooperation with the application module to transfer the communication session.

The architecture for use of a wearable device as a Session Initiation Protocol (SIP)-enabled control device in a SIP infrastructure is described in a published paper entitled "Unleashing the Power of Wearable Devices in a SIP Infrastructure" by Acharya et. al. Acharya describes through several examples that wearable devices can expand the power of SIP and wearable devices can be used quite effectively to initiate communication through multiple media. Wearable devices present a very convenient interface for determining the originator of media streams directed towards the user. However, limitations in existing mobile and wearable devices prevent continuous connectivity to the network which is to be solved with advances in 3G networks.

United States Patent Publication No. US 2004/122954 A1 entitled "Method and system for user initiated inter-device, inter-system, and inter-internet protocol address handoff" describes an apparatus and method by which Internet Protocol (IP) traffic can be transferred (i.e. handoff) between two different terminals operating according to two different technology standards in two different systems with two different IP addresses. For example, a session handoff can be made between a terminal in Wireless Local Area Network (WLAN) a terminal in a 3GPP UMTS or between a terminal in CDMA2000 and a terminal in a 3GPP UMTS. These terminals can be either physically separate entities or logical entities that are encapsulated within a common enclosure.

A method for communicating session information to a first communications device is described in United States Patent Publication No. US 2007/118656 A1. The method involves receiving session information related to the second communications device, wherein a set of active communications devices for the communications session includes the second communications device and the third communications device; storing at least a portion of the session information related to the second communications device. Thereafter, at least a portion of the session information is communicated to the first communications device; and resuming the communications session with the first device and the third device using at least a portion of the session information, wherein the set of active communications devices for the communications session has changed from the second communications device and the third communications device to the first communications device and the third communications device.

The invention is represented by the independent claim. Further aspects of the invention are represented by the dependent claims.

The subject matter claimed herein is not limited to embodiments that solve any disadvantages or that operate only in environments such as those described above. Rather, this background is only provided to illustrate one exemplary technology area where some embodiments described herein may be practice.

### SUMMARY OF INVENTION

In one embodiment of the present invention is a method for session transfer mechanism between communication devices. The method comprises the steps of triggering a session transfer on a first device having an active session with a corresponding device, identifying a second device from a plurality of devices for the session transfer, transferring the active session transpiring between the first device and the corresponding device to between the second device and the corresponding device and reclaiming the active session transpiring between the second device and the corresponding device if a session reclaiming is triggered on the first device.

### BRIEF DESCRIPTION OF THE ACCOMPANYING DRAWINGS

For the purpose of facilitating an understanding of the present invention, there is illustration in the accompanying drawings, from an inspection of which, when considered in connection with the following description, the invention, its construction and operation and many of its advantages would be readily understood and appreciated.
FIG. 1 illustrates a flowchart for session transfer mechanism between devices.
FIG. 2 illustrates session transfer of an active session from a mobile device to a desktop device.
FIG. 3 illustrates session reclaiming of an active session from a desktop device to a mobile device.
FIG. 4 illustrates session transfer of an active session from a mobile device to a desktop device using an SIP server.

### DETAILED DESCRIPTION OF THE PREFERRED EMBODIMENTS

The present invention relates to a method for session transfer mechanism between communication devices. Hereinafter, this specification will describe the present invention according to the preferred embodiments of the present invention. However, it is to be understood that limiting the description to the preferred embodiments of the invention is merely to facilitate discussion of the present invention and it is envisioned that those skilled in the art may devise various modifications and equivalents.

The present invention relates to a method for session transfer mechanism between communication devices. The session transfer mechanism includes session transfer and session reclaiming between devices. The present invention provides a mechanism that is capable of transferring and automatically reclaiming an active session from one device to another without a user having to be aware of addressing information of the related devices.

The present invention describes a simple and automated method of session transfer and session reclaiming across devices by addressing several limitations of the conventional session transfer mechanism. The first is, the present invention incorporates location information of the related devices as to enable seamless session transfer without user intervention and the second is leveraging on the location information so as to allow an authenticated device to reclaim an ongoing active session from another device.

The method of the present invention tracks the location of active devices, devices having active sessions and measures its distance from surrounding devices, that are passive devices or target devices, to allow a single-button press on any given active device for transferring an active session to the closest passive device in the vicinity. The passive device where the active session has been successfully transferred is now referred to as the present active device and is in control of the active session. The previously active device is capable of reclaiming the session back onto to itself from the present active device by a single-button press.

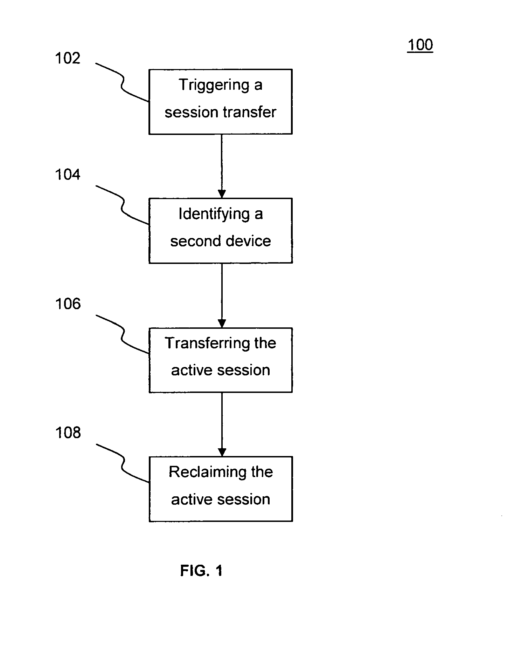

Reference is first being made to FIG. 1. FIG. 1 illustrates a flowchart for session transfer mechanism between devices. The method (100) for session transfer mechanism begins with triggering a session transfer (102) on a first device having an active session with a corresponding device. The first device and the corresponding device may be a mobile device or an immobile device. In some instances, the first device may be referred to as the active device or the originator device.

Upon triggering a session transfer (102), a second device is identified (104) from a plurality of devices for the session transfer. The second device may be a mobile device or an immobile device. In some instances, the second device may be referred to as the passive device or the target device. Once the second device has been identified, transferring the active session (106) transpiring between the first device and the corresponding device to between the second device and the corresponding device is initiated.

The description and drawings herein refer to the first device as a mobile device, the second device as a desktop device and the corresponding device as the corresponding node (CN) for convenience of explanation and illustration.

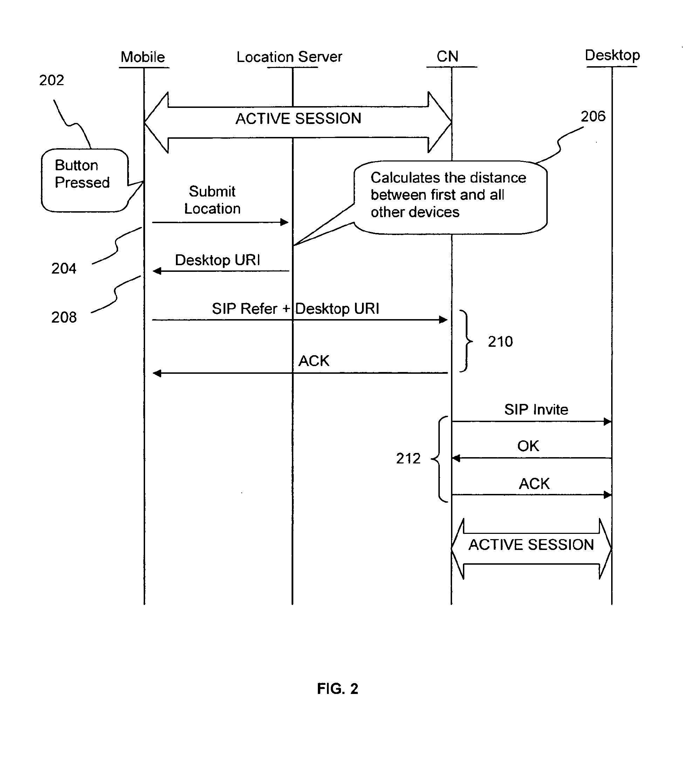

Reference is now being made to FIG. 2. FIG. 2 illustrates session transfer of an active session from a mobile device to a desktop device. The session transfer is implemented for an active session transpiring between the mobile device and a corresponding node. The session transfer begins with triggering the session transfer (102) by depressing a transfer button (202) on the first device, in this case the mobile device. This consequently causes the mobile device to send its location information (204) to a location server.

In another embodiment of the present invention, the triggering of the session transfer (102) may comprise multiple buttons depressing as opposed to a single button press, wherein the former provides flexibility in identifying the second device (104) based on information not limited to only location. Other possible information may include user-defined groups or specifically designated devices.

Once the session transfer has been triggered, a second device from a plurality of devices is identified based on the distance of the same from the mobile device that is calculated in the location server.

Identifying the second device (104) begins with storing a location information of each device of the plurality of devices in the location server. In the case of mobile devices, the location of the mobile devices are dynamically tracked and stored by the location server. In the case of immobile devices, the location of the immobile devices are configured and stored by the location server.

Identifying the second device (104) continues with the location server calculating (206) distance information between the mobile device and each device of the plurality of devices. The location server then identifies the second device from the plurality of devices having a closest distance to the mobile device, in this case the desktop device. To initiate transferring of the session, the location server sends a Uniform Resource Identifier (URI) of the desktop device (208) to the mobile device.

Transferring of the active session (106) transpiring between the mobile device and the corresponding node to between the desktop device and the corresponding node includes two handshaking occurrences. For this purpose, the location server implements a Session Initiation Protocol (SIP) that initiates a SIP REFER handshaking (210) and a SIP INVITE handshaking (212).

The SIP REFER handshaking (210) occurs between the mobile device and the corresponding node, wherein the SIP REFER handshaking comprises sending the Uniform Resource Identifier of the desktop device from the mobile device to the corresponding node. The SIP INVITE handshaking (212) occurs between the corresponding node and the desktop device. Upon successfully executing the two handshaking, the active session is transferred from between the mobile device and the corresponding node to between the desktop device and the corresponding node. The point of control lies in the desktop device. However, the mobile device has the capability of reclaiming the transferred active session.

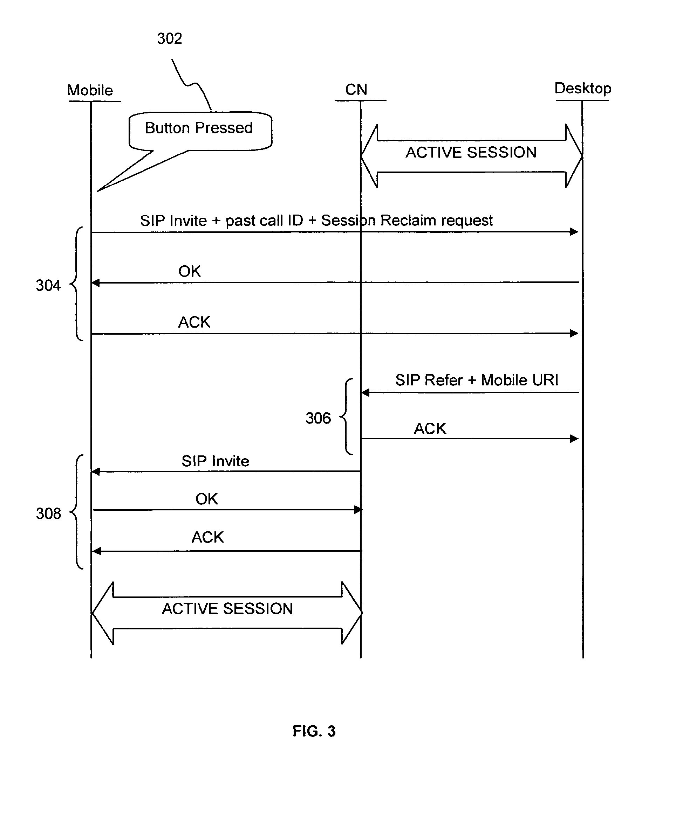

Reference is now being made to FIG. 3. FIG. 3 illustrates session reclaiming of an active session from a desktop device to a mobile device. If a session reclaiming is triggered on the first device, reclaiming the active session (108) transpiring between the second device and the corresponding device is initiated. Reclaiming the active session (108) includes triggering a session reclaim on the first device, in this case the mobile device and reclaiming the active session transpiring between the second device, in this case the desktop device and the corresponding device to between the mobile device and the corresponding device.

The session reclaim begins with triggering the session reclaim by depressing a reclaim button (302) on the mobile device. This consequently invokes a SIP INVITE handshaking (304) between the mobile device and the desktop device, wherein the SIP INVITE comprises sending a session identification and a session reclaim message from the mobile device to the desktop device. The session identification is often referred to as a call ID and the session reclaim message is an extra tag denoting that this SIP INVITE handshaking is for the purpose of triggering a session reclaiming as opposed to the SIP INVITE handshaking during transferring or reclaiming of an active session.

Reclaiming the active session transpiring between the desktop device and the corresponding node to between the mobile device and the corresponding node includes two handshaking occurrences, a SIP REFER handshaking (306) and a SIP INVITE handshaking (308). The SIP REFER handshaking (306) occurs between the desktop device and the corresponding node, wherein the SIP REFER handshaking comprises sending the Uniform Resource Identifier of the mobile device from the desktop device to the corresponding node. The SIP INVITE handshaking (308) occurs between the corresponding node and the mobile device. Upon successfully executing the two handshaking, the active session is reclaimed from between the desktop device and the corresponding node to between the mobile device and the corresponding node.

The session transfer is not limited to a single tier transfer that comprises transferring of the active session (106) transpiring between the mobile device and the corresponding device to between the desktop device and the corresponding device. In another embodiment of the present invention, transferring of the active session (106) may occur more than once. For instance, a dual tier transfer comprises firstly transferring the active session transpiring between a mobile device and a corresponding node to between a first desktop device and the corresponding node, and secondly, transferring the active session transpiring between the first desktop device and the corresponding node to between a second desktop device and the corresponding node. In this case, the session reclaiming may be triggered by any one of the devices that the active session was transferred from, which is either the mobile device or the first desktop device.

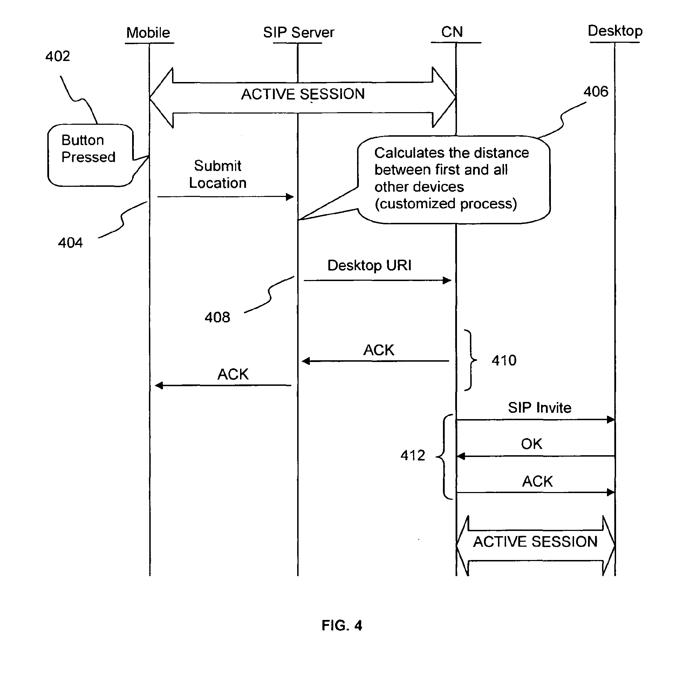

In another embodiment of the present invention, the location server may be substituted by an SIP server. Reference is now being made to FIG. 4. FIG. 4 illustrates session transfer of an active session from a mobile device to a desktop device using an SIP server.

The session transfer begins with triggering the session transfer (102) by depressing a transfer button (402) on the first device, in this case the mobile device. This consequently causes the mobile device to send its location information (404) to the SIP server. Once the session transfer has been triggered, a second device from a plurality of devices is identified based on the distance of the same from the mobile device calculated in the SIP server using a customized process (406).

Upon identifying the second device, in this case the desktop device, the SIP servers sends a Uniform Resource Identifier of the desktop device (408) to the corresponding device, in this case the corresponding node. A cascaded acknowledgement (410) takes place prior to transferring of the active session. The cascaded acknowledgement (410) comprises the corresponding node sending an acknowledgment message to the SIP sever and the SIP server consequently sending an acknowledgment message to the mobile device to indicate that the session transfer may be executed.

Thereafter an SIP INVITE handshaking (412) occurs between the corresponding node and the desktop device. Upon successfully executing the handshaking, the active session is transferred from between the mobile device and the corresponding node to between the desktop device and the corresponding node. The point of control lies in the desktop device. However, the mobile device has the capability of reclaiming the transferred active session.

## Claims

1. A method (100) for session transfer mechanism, the method comprising steps of:
triggering a session transfer (102) on a first device having an active session with a corresponding device;
identifying a second device (104) from a plurality of devices for the session transfer;
transferring the active session (106) transpiring between the first device and the corresponding device to between the second device and the corresponding device; and
reclaiming the active session (108) transpiring between the second device and the corresponding device if a session reclaiming is triggered on the first device comprising that reclaiming the active session (108) further comprises steps of:
depressing a reclaim button (302) on the first device;
SIP INVITE handshaking (304) between the first device and the second device, wherein the SIP INVITE comprises sending a session identification and a session reclaim message from the first device to the second device;
SIP REFER handshaking (306) between the second device and the corresponding device, wherein the SIP REFER handshaking comprises sending the Uniform Resource Identifier of the first device from the second device to the corresponding device; and
SIP INVITE handshaking (308) between the corresponding device and the first device.

2. The method according to claim 1, wherein the first device, the corresponding device and the second device comprises a mobile device or an immobile device.

3. The method according to claim 1, wherein triggering the session transfer (102) comprises the steps of:
depressing a transfer button (202) on the first device; and
sending a location information (204) of the first device to a location server.

4. The method according to claim 1, wherein identifying the second device (104) comprises the steps of:
storing in a location server, a location information of each device of the plurality of devices;
calculating in the location server (206), a distance information between the first device and each device of the plurality of devices;
identifying in the location server, the second device from the plurality of devices having a closest distance to the first device; and
sending an Uniform Resource Identifier of the second device (208) from the location server to the first device.

5. The method according to claim 1, wherein transferring the active session (106) comprises the steps of:
SIP REFER handshaking (210) between the first device and the corresponding device, wherein the SIP REFER handshaking comprises sending the Uniform Resource Identifier of the second device from the first device to the corresponding device; and
SIP INVITE handshaking (212) between the corresponding device and the second device.

6. The method according to claim 1, wherein reclaiming the active session (108) comprises the steps of:
triggering a session reclaim on the first device; and
reclaiming the active session transpiring between the second device and the corresponding device to between the first device and the corresponding device.

7. The method according to claim 3, wherein the location server comprises a SIP server.

8. The method according to claim 1, wherein identifying the second device (104) comprises the steps of:
storing in a SIP server, a location information of each device of the plurality of devices;
calculating in the SIP server (406) a distance information between the first device and each device of the plurality of devices;
identifying in the SIP server, the second device from the plurality of devices having a closest distance to the first device,
sending an Uniform Resource Identifier of the second device (408) from the SIP server to the corresponding device; and
receiving a cascaded acknowledgement (410) from the corresponding node to the SIP server to the first device.

9. The method according to claim 1, wherein transferring the active session (106) comprises SIP INVITE handshaking (412) between the corresponding device and the second device.

## Patentansprüche

1. Verfahren (100) für einen Sessionübertragungsmechanismus, wobei das Verfahren folgende Schritte aufweist:
Auslösen einer Sessionübertragung (102) an einer ersten Vorrichtung, die eine aktive Session mit einer entsprechenden Vorrichtung hat;
Identifizieren einer zweiten Vorrichtung (104) aus einer Vielzahl von Vorrichtungen für die Sessionübertragung;
Übertragen der aktiven Session (106), die sich zwischen der ersten Vorrichtung und der entsprechenden Vorrichtung ereignet,
zu zwischen der zweiten Vorrichtung und der entsprechenden Vorrichtung; und
Regenerieren der aktiven Session (108), die sich zwischen der zweiten Vorrichtung und der entsprechenden Vorrichtung ereignet,
wenn eine Sessionregeneration an der ersten Vorrichtung ausgelöst wird,
und aufweist, dass
ein Regenerieren der aktiven Session (108) weiterhin folgende Schritte aufweist:
Drücken einer Regenerierungstaste (302) an der ersten Vorrichtung;
Durchführen eines SIP INVITE-Handshake-Betriebs (304) zwischen der ersten Vorrichtung und der zweiten Vorrichtung, wobei der SIP INVITE-Handshake-Betrieb ein Senden einer Sessionidentifikation und einer Sessionregenerierungsnachricht von der ersten Vorrichtung zu der zweiten Vorrichtung aufweist;
Durchführen eines SIP REFER-Handshake-Betriebs (306) zwischen der zweiten Vorrichtung und der entsprechenden Vorrichtung, wobei der SIP REFER-Handshake-Betrieb ein Senden des einheitlichen Bezeichners für Ressourcen (= Uniform Resource Identifier) der ersten Vorrichtung von der zweiten Vorrichtung zu der entsprechenden Vorrichtung aufweist; und Durchführen eines SIP INVITE-Handshake-Betriebs (308) zwischen der entsprechenden Vorrichtung und der ersten Vorrichtung.

2. Verfahren nach Anspruch 1, wobei die erste Vorrichtung, die entsprechende Vorrichtung und die zweite Vorrichtung eine mobile Vorrichtung oder eine nichtmobile Vorrichtung aufweist.

3. Verfahren nach Anspruch 1, wobei ein Auslösen der Sessionübertragung (102) die folgenden Schritte aufweist:
Drücken einer Übertragungstaste (202) an der ersten Vorrichtung; und
Senden einer Lokalisierungsinformation (204) der ersten Vorrichtung zu einem Lokalisierungsserver.

4. Verfahren nach Anspruch 1, wobei ein Identifizieren der zweiten Vorrichtung (104) die folgenden Schritte aufweist:
Speichern einer Lokalisierungsinformation jeder Vorrichtung der Vielzahl von Vorrichtungen in einem Lokalisierungsserver;
Berechnen einer Information über eine Entfernung zwischen der ersten Vorrichtung und jeder Vorrichtung der Vielzahl von Vorrichtungen in dem Lokalisierungsserver (206);
Identifizieren der zweiten Vorrichtung aus der Vielzahl von Vorrichtungen mit einer nächsten Entfernung zu der ersten Vorrichtung in dem Lokalisierungsserver; und
Senden eines einheitlichen Bezeichners für Ressourcen (= Uniform Resource Identifier) der zweiten Vorrichtung (208) von dem Lokalisierungsserver zu der ersten Vorrichtung.

5. Verfahren nach Anspruch 1, wobei ein Übertragen der aktiven Session (106) die folgenden Schritte aufweist:
Durchführen eines SIP REFER-Handshake-Betriebs (210) zwischen der ersten Vorrichtung und der entsprechenden Vorrichtung, wobei der SIP REFER-Handshake-Betrieb ein Senden des einheitlichen Bezeichners für Ressourcen (= Uniform Resource Identifier) der zweiten Vorrichtung von der ersten Vorrichtung zu der entsprechenden Vorrichtung aufweist; und
Durchführen eines SIP INVITE-Handshake-Betriebs (212) zwischen der entsprechenden Vorrichtung und der zweiten Vorrichtung.

6. Verfahren nach Anspruch 1, wobei ein Regenerieren der aktiven Session (108) die folgenden Schritte aufweist:
Auslösen eines Regenerierens einer Session an der ersten Vorrichtung; und
Regenerieren der aktiven Session, die sich zwischen der zweiten Vorrichtung und der entsprechenden Vorrichtung ereignet, zu zwischen der ersten Vorrichtung und der entsprechenden Vorrichtung.

7. Verfahren nach Anspruch 3, wobei der Lokalisierungsserver einen SIP-Server aufweist.

8. Verfahren nach Anspruch 1, wobei ein Identifizieren der zweiten Vorrichtung (104) die folgenden Schritte aufweist:
Speichern einer Lokalisierungsinformation jeder Vorrichtung der Vielzahl von Vorrichtungen in einem SIP-Server;
Berechnen einer Information über eine Entfernung zwischen der ersten Vorrichtung und jeder Vorrichtung der Vielzahl von Vorrichtungen in dem SIP-Server (406);
Identifizieren der zweiten Vorrichtung aus der Vielzahl von Vorrichtungen mit einer nächsten Entfernung zu der ersten Vorrichtung in dem SIP-Server;
Senden eines einheitlichen Bezeichners für Ressourcen (= Uniform Resource Identifier) der zweiten Vorrichtung (408) von dem SIP-Server zu der entsprechenden Vorrichtung; und Empfangen einer kaskadierten Bestätigung (410) von dem entsprechenden Knoten zu dem SIP-Server zu der ersten Vorrichtung.

9. Verfahren nach Anspruch 1, wobei ein Übertragen der aktiven Session (106) einen SIP INVITE-Handshake-Betrieb (412) zwischen der entsprechenden Vorrichtung und der zweiten Vorrichtung aufweist.

## Revendications

1. Procédé (100) offrant un mécanisme de transfert de session, le procédé comprenant les étapes consistant à:
déclencher un transfert de session (102) sur un premier dispositif, dont une session est active avec un dispositif correspondant,
identifier un second dispositif (104) parmi une pluralité de dispositifs pour le transfert de session,
transférer la session active (106), qui s'effectue entre le premier dispositif et le dispositif correspondant, entre le second dispositif et le dispositif correspondant, et
reprendre la session active (108) s'effectuant entre le second dispositif et le dispositif correspondant, si une reprise de session est déclenchée sur le premier dispositif,
procédé, dans lequel
la reprise de la session active (108) comprend, en outre, les étapes consistant à:
appuyer sur un bouton de reprise (302) sur le premier dispositif,
inviter à établir une liaison SIP [SIP INVITE] (304) entre le premier dispositif et le second dispositif, l'invitation SIP [SIP INVITE] comprenant l'envoi d'une identification de session et d'un message de reprise de session depuis le premier dispositif au second dispositif,
renvoyer à l'établissement de la liaison SIP [SIP REFER] (306) entre le second dispositif et le dispositif correspondant, le renvoi à l'établissement de la liaison SIP [SIP REFER] comprenant l'envoi d'un identificateur de ressource uniforme du premier dispositif depuis le second dispositif au dispositif correspondant, et
inviter à établir une liaison SIP [SIP INVITE] (308) entre le dispositif correspondant et le premier dispositif.

2. Procédé suivant la revendication 1, dans lequel le premier dispositif, le dispositif correspondant et le second dispositif comprennent un dispositif mobile ou un dispositif immobile.

3. Procédé suivant la revendication 1, dans lequel le déclenchement du transfert de session (102) comprend les étapes consistant à:
appuyer sur un bouton de transfert (202) sur le premier dispositif et
envoyer une information de localisation (204) du premier dispositif à un serveur de localisation.

4. Procédé suivant la revendication 1, dans lequel l'identification du second dispositif (104) comprend les étapes consistant à:
stocker une information de localisation de chaque dispositif parmi la pluralité de dispositifs dans un serveur de localisation,
calculer, dans le serveur de localisation (206), une information relative à la distance entre le premier dispositif et chaque dispositif parmi la pluralité de dispositifs,
identifier, dans le serveur de localisation, le second dispositif parmi la pluralité de dispositifs présentant la distance la plus proche par rapport au premier dispositif, et
envoyer un identificateur de ressource uniforme du second dispositif (208) depuis le serveur de localisation au premier dispositif.

5. Procédé suivant la revendication 1, dans lequel le transfert de la session active (106) comprend les étapes consistant à:
renvoyer à l'établissement de la liaison SIP [SIP REFER] (210) entre le premier dispositif et le dispositif correspondant, le renvoi à l'établissement de la liaison SIP [SIP REFER] comprenant l'envoi de l'identificateur de ressource uniforme du second dispositif depuis le premier dispositif au dispositif correspondant, et
inviter à établir une liaison SIP [SIP INVITE] (212) entre le dispositif correspondant et le second dispositif.

6. Procédé suivant la revendication 1, dans lequel la reprise de la session active (108) comprend les étapes consistant à:
déclencher une reprise de session sur le premier dispositif et
reprendre la session active, qui s'effectue entre le second dispositif et le dispositif correspondant, entre le premier dispositif et le dispositif correspondant.

7. Procédé suivant la revendication 3, dans lequel le serveur de localisation comprend un serveur SIP.

8. Procédé suivant la revendication 1, dans lequel l'identification du second dispositif (104) comprend les étapes consistant à:
stocker une information de localisation de chaque dispositif parmi la pluralité de dispositifs dans un serveur SIP,
calculer, dans le serveur SIP (406) une information relative à la distance entre le premier dispositif et chaque dispositif parmi la pluralité de dispositifs,
identifier, dans le serveur SIP, le second dispositif parmi la pluralité de dispositifs présentant la distance la plus proche par rapport au premier dispositif,
envoyer un identificateur de ressource uniforme du second dispositif (408) depuis le serveur SIP au dispositif correspondant, et
recevoir un accusé de réception en cascade (410) depuis le noeud correspondant au serveur SIP et de celui-ci au premier dispositif.

9. Procédé suivant la revendication 1, dans lequel le transfert de la session active (106) comprend l'invitation à établir une liaison SIP [SIP INVITE] (412) entre le dispositif correspondant et le second dispositif.
